# FASCICULE DE BREVET EUROPEEN

(11) **EP 3 302 028 B1**
(45) Date de publication et mention de la délivrance du brevet: **25.03.2020**
(21) Numéro de dépôt: 16732453.2
(22) Date de dépôt: 01.06.2016
(51) Int. Cl.: A01G 9/14

(54) **ELEMENT DE COUVERTURE SOUPLE POUR ABRI DE CULTURE, ABRI DE CULTURE MUNI D'UN TEL ELEMENT DE COUVERTURE**
FLEXIBLES ABDECKELEMENT FÜR EIN GEWÄCHSHAUS, MIT SOLCH EINEM ABDECKELEMENT AUSGESTATTETES GEWÄCHSHAUS
FLEXIBLE COVER ELEMENT FOR A CROP SHELTER, CROP SHELTER PROVIDED WITH SUCH A COVER ELEMENT

(30) Priorité: 02.06.2015 FR 1554996
(43) Date de publication de la demande: 11.04.2018
(73) Titulaire: Europlastic, 30470 Aimargues (FR)
(72) Inventeur: CALVET, Christophe, 30470 Aimargues (FR)
(74) Mandataire: IPAZ
(86) Numéro de dépôt international: PCT/EP2016/062353
(87) Numéro de publication internationale: WO 2016/193293

(56) Documents cités:
- AU-B2- 502 006
- BE-A2- 902 321
- FR-A1- 2 569 523
- FR-A1- 2 838 287

## Description

La présente invention concerne un élément de couverture souple, telle qu'une bâche, pour abri de culture, de type serre. Elle concerne également un abri de culture muni d'au moins un tel élément de couverture souple.

Le domaine de l'invention est le domaine des abris de culture, notamment le domaine des couvertures souples pour abris de culture.

### Etat de la technique

Les abris de culture, tels que des serres, sont généralement constitués par une ossature sur laquelle est aménagé un élément de couverture souple, généralement réalisée en plastique.

La qualité de fixation de l'élément de couverture souple, également appelé bâche, sur l'ossature présente une importance capitale sur la longévité de l'abri de culture. En effet, lorsque l'élément de couverture souple n'est pas suffisamment tendu, il devient vulnérable en cas de vents forts, ce qui présente des risques de dégâts pour l'abri de culture mais aussi pour les cultures, le personnel pouvant potentiellement se trouver dans ou au voisinage de l'abri de culture et pour l'environnement de l'abri de culture.

Une première solution de fixation consiste à pincer l'élément de couverture souple dans un profilé, fixé sur l'ossature de l'abri de culture à l'aide d'une clavette venant se loger dans ledit profilé. Cette solution n'est pas ergonomique et sa mise en œuvre est complexe et chronophage. De plus, elle ne permet pas de tendre suffisamment l'élément de couverture souple entre les deux côtés longitudinaux de l'abri de culture. De plus, le pinçage de l'élément de couverture souple abime ledit élément de couverture souple provoquant sa déchirure dans le temps.

Une autre solution consiste à prévoir un ourlet au niveau de chacune des bordures longitudinales de l'élément de couverture souple. Un élément de fixation longiforme, telle qu'une barre métallique, est introduit dans ledit ourlet, puis coincée sous des pattes de fixation solidaires de l'ossature et faisant saillie de ladite ossature le long de deux côtés longitudinaux de l'abri de culture. Cette solution présente de nombreux avantages par rapport à la première solution. Cependant, la fixation proposée par cette solution est peu flexible et non personnalisable. Elle ne permet pas d'ajuster la tension de l'élément de couverture souple entre les deux côtés longitudinaux de l'abri de culture. Un exemple d_{'}une telle solution peut être trouvé dans FR 2569523 A1.

Un but de la présente invention est de remédier à ces inconvénients. Un autre but de l'invention est de proposer un élément de couverture souple pour abri de culture proposant une plus grande flexibilité de fixation sur une ossature d'abri de culture.

Encore un autre but de l'invention est de proposer un élément de couverture souple pour abri de culture permettant une fixation personnalisable sur une ossature d'abri de culture.

Enfin, un autre but de l'invention est de proposer un élément de couverture souple pour abri de culture permettant d'ajuster la tension dudit élément de couverture souple entre les deux côtés longitudinaux de l'abri de culture.

### Exposé de l'invention

L'invention permet d'atteindre au moins l'un de ces buts par un élément de couverture souple, pour abri de culture, de type serre, prévu pour être fixé sur une ossature dudit abri de culture du côté d'au moins un de ses bords longitudinaux, **caractérisé en ce qu'**il comprend du côté d'au moins un desdits bords longitudinaux, une série d'au moins deux ouvertures, dites de fixation, en particulier longitudinales, décalées dans une direction perpendiculaire audit bord longitudinal, et prévues chacune pour recevoir sélectivement un élément de fixation longiforme de sorte ajuster la tension dudit élément de couverture en fonction de l'ouverture de fixation utilisée.

Ainsi, l'invention propose un élément de couverture souple, au moins en partie transparente, comprenant au moins du côté d'un de ses bords longitudinaux une série d'au moins deux ouvertures de fixation distribuées dans le sens de la largeur de l'élément de couverture. Chacune de ces ouvertures est prévue pour accueillir un élément de fixation longiforme, en forme d'un tube ou d'une barre, permettant de fixer l'élément de couverture à l'ossature de l'abri de culture. Par conséquent, en fonction de l'ouverture de fixation utilisée, il est possible de modifier et d'ajuster la tension de l'élément de couverture lorsqu'il est disposé sur l'ossature de l'abri de culture. De ce fait, l'élément de couverture permet de réaliser d'une part, une fixation personnalisable de l'élément de couverture sur l'abri de culture, et d'autre part, un ajustement de la tension dudit élément de couverture souple entre les deux côtés longitudinaux de l'abri de culture.

De plus, lorsque la tension de l'élément de couverture se modifie dans le temps du fait d'une modification de température ou sous l'effet du vieillissement de l'élément de couverture, il est possible de réaliser un nouvel ajustement de cette tension, à la hausse comme à la baisse, en changeant l'ouverture de fixation. Par conséquent, l'élément de couverture selon l'invention permet une plus grande flexibilité de fixation sur une ossature d'abri de culture.

Selon l'invention, l'expression « du côté d'un bord » de l'élément de couverture désigne en emplacement se trouvant au niveau dudit bord, ou un emplacement se trouvant entre ledit bord et le centre de l'élément de couverture. Ainsi, selon l'invention, lesdites au moins deux ouvertures de fixation longitudinales peuvent être disposées au niveau d'au moins un des bords longitudinaux de l'élément de couverture, ou au niveau d'un emplacement se trouvant entre son centre (par rapport à ses bords longitudinaux) et un bord longitudinal.

L'élément de couverture peut en particulier être transparent au moins en partie. Alternativement, l'élément de couverture peut ne pas être transparent et être opaque.

Par ailleurs, l'élément de couverture peut être réversible.

Préférentiellement, mais de manière nullement limitative, au moins une ouverture de fixation longitudinale peut se prolonger, de manière continue ou discontinue, sensiblement sur toute la longueur de l'élément de couverture.

Alternativement, au moins une ouverture de fixation longitudinale peut être formée par plusieurs anneaux alignés entre eux, sensiblement sur toute la longueur de l'élément de couverture.

Généralement, mais de manière nullement limitative, l'élément de fixation peut être prévu pour être fixé sur l'ossature de l'abri de culture du côté de deux bords longitudinaux opposés.

Suivant un premier mode de réalisation, l'élément de fixation peut comprendre :
- du côté de l'un des bords longitudinaux opposés, une série d'au moins deux ouvertures de fixation, en particulier longitudinales, décalées dans une direction perpendiculaire audit bord longitudinal ; et
- du côté de l'autre desdits bords, une unique ouverture longitudinale de fixation ;
prévues chacune pour recevoir un élément de fixation longiforme.

Ce mode de réalisation ne permet de réaliser un ajustement ou une modification de la tension de l'élément de couverture (lorsqu'il est fixé à l'ossature de l'abri de culture) uniquement du côté d'un des bords longitudinaux opposés. Ce mode de réalisation présente l'avantage d'un coût de fabrication faible.

Selon un deuxième exemple de réalisation, l'élément de couverture selon l'invention peut comprendre du côté de chacun des bords longitudinaux opposés, une série d'au moins deux ouvertures longitudinales de fixation, décalées dans une direction perpendiculaire audit bord longitudinal, et prévues chacune pour recevoir un élément de fixation longiforme.

Ce mode de réalisation permet de réaliser un ajustement ou une modification de la tension de l'élément de couverture (lorsqu'il est fixé à l'ossature de l'abri de culture) sur chaque côté longitudinal de fixation de l'élément de couverture mobile sur l'abri de culture. Par conséquent, ce mode de réalisation permet une plus grande flexibilité lors de l'ajustement de la tension de l'élément de couverture sur l'abri de fixation que ce soit en termes de quantité d'ajustement.

De plus, ce mode de réalisation permet un ajustement plus ergonomique et plus rapide pour l'opérateur. En effet, lorsque deux abris de culture sont juxtaposés suivant une direction longitudinale, ce qui est généralement le cas, un opérateur se plaçant entre les deux abris peut réaliser un ajustement de la tension pour les deux abris.

En outre, quel que soit le mode de réalisation, l'élément de couverture peut en outre comprendre, au niveau d'au moins une zone, dite intermédiaire, se trouvant entre les bords longitudinaux dudit élément de couverture, au moins une ouverture de fixation ou une série d'au moins deux ouvertures de fixation, en particulier longitudinale(s).

Une telle ouverture de fixation permet en outre d'apporter la possibilité de fixer l'élément de couverture, et éventuellement d'ajuster la tension de l'élément de couverture, au niveau d'une ou plusieurs zones intermédiaires autres que les bords longitudinaux de l'élément de couverture souple.

Ce mode de réalisation permet en outre d'utiliser un même élément de couverture pour couvrir deux ou plusieurs abris de culture juxtaposés, tout en permettant d'ajuster de manière individuelle la tension de la partie de l'élément de couverture associée à chaque abri de culture.

L'élément de couverture souple peut en outre comprendre au moins une ouverture de fixation, en particulier une série d'au moins deux ouvertures de fixation, dite transversale(s), en particulier disposés dans le sens de la largeur dudit élément de couverture souple, et en particulier suivant une direction perpendiculaire aux bords longitudinaux dudit élément de couverture.

Lorsque l'élément de couverture souple comprend une série d'au moins deux ouvertures de fixation transversales, lesdites ouvertures de fixation transversales peuvent être décalées les unes par rapport aux autres suivant une direction parallèle à un bord longitudinal dudit élément de couverture.

Plus particulièrement, l'élément de couverture souple peut comprendre une ouverture de fixation transversale ou une série d'au moins deux ouvertures transversales, disposée au niveau d'au moins un, en particulier de chacun, de ses bords perpendiculaires à ses bords longitudinales.

Préférentiellement, mais de manière nullement limitative, au moins une ouverture de fixation transversale peut se prolonger, de manière continue ou discontinue, sensiblement sur toute la largeur de l'élément de couverture.

Alternativement, au moins une ouverture de fixation transversale peut être formée par plusieurs anneaux alignés entre eux, sensiblement sur toute la largeur de l'élément de couverture.

Avantageusement, au moins une, en particulier chaque, ouverture de fixation peut être formée par repliement de l'élément de couverture sur lui-même au niveau d'un bord, et collage de la partie repliée sur le reste dudit élément de couverture suivant une ligne de collage, continue ou discontinue. Lorsqu'il s'agit d'une ouverture de fixation longitudinale, la ligne de collage est longitudinale et lorsqu'il s'agit d'une ouverture de fixation transversale, la ligne de collage est transversale, en particulier perpendiculaire aux bords latéraux.

Ainsi, il est possible de réaliser une ouverture de fixation unique, ou une série de plusieurs ouvertures de fixation.

Par ailleurs, lorsque l'élément de couverture est réalisé, au moins en partie, par assemblage/association d'au moins deux feuilles/couches de couverture souples, au moins une, en particulier, chaque ouverture de fixation peut être réalisée par collage entre-elles de deux desdites feuilles/couches suivant une ligne de collage, continue ou discontinue.

Lorsqu'il s'agit d'une ouverture de fixation longitudinale, la ligne de collage est longitudinale et lorsqu'il s'agit d'une ouverture de fixation transversale, la ligne de collage est transversale, en particulier perpendiculaire aux bords latéraux.

En outre, au moins une, en particulier chaque, ouverture de fixation, peut être formée par collage audit élément de couverture, par exemple sur une surface supérieure de l'élément de couverture, d'un anneau, ou d'une série d'anneaux alignés, réalisé(s) indépendamment dudit élément de couverture.

Le ou les anneaux sont disposés suivant une ligne longitudinale lorsqu'il s'agit d'une ouverture de fixation longitudinale, suivant une ligne traversable, en particulier perpendiculaire aux bords latéraux, lorsqu'il s'agit d'une ouverture de fixation transversale.

Dans ce cas, le ou les anneaux peuvent être réalisés avec la même matière que, ou avec une matière différente de, celle utilisée pour fabriquer l'élément de couverture

Quel que soit le mode de réalisation, le collage peut être réalisé par apport d'une substance collante ou adhésive, externe à l'élément de couverture.

Préférentiellement, le collage peut être réalisé par chauffage et compression :
- de l'élément de couverture lui-même ;
- entre-elles, d'au moins couches/feuilles formant ledit élément de couverture ; ou
- de l'élément de couverture avec le ou les anneaux indépendants.

Ce mode de réalisation est plus simple à mettre en œuvre comparé à l'utilisation d'une substance collante ou adhésive.

Autrement dit, le collage peut être réalisé par thermocollage ou soudure.

Pour au moins une série, longitudinale ou transversale, comprenant plusieurs ouvertures de fixation :
- au moins deux ouvertures de fixation de ladite série peuvent présenter une taille identique ou différente ; et/ou
- les ouvertures de fixation de ladite série peuvent être décalées les unes des autres suivant un pas d'écartement constant ou variable.

De plus, lorsque l'élément de couverture comprend plusieurs séries comprenant chacune au moins deux ouvertures de fixation :
- au moins une ouverture de fixation d'une desdites séries, se trouvant par exemple du côté d'un des bords de l'élément de couverture, peut présenter une taille identique à, ou différente de, la taille d'au moins une ouverture de fixation d'une autre série, se trouvant par exemple du côté d'un autre bord de l'élément de couverture ; et/ou
- au moins deux ouvertures de fixation d'une desdites séries, se trouvant par exemple du côté d'un des bords de l'élément de couverture, peuvent présenter entre-elles un pas d'écartement identique au, ou différent du, pas d'écartement entre au moins deux ouvertures de fixation d'une autre série, se trouvant par exemple du côté d'un autre bord de l'élément de couverture.

Suivant un exemple de réalisation préféré, mais nullement limitatif :
- au moins une ouverture de fixation présente une largeur comprise entre 2 et 6cm, en particulier une largeur égale à 4cm ; et/ou
- au moins deux ouvertures de fixation d'une série présentent entre-elles un pas d'écartement compris entre 2 et 6cm, en particulier un pas d'écartement de 4cm.

Toujours suivant un exemple de réalisation préféré, mais nullement limitatif, l'élément de couverture souple peut comprendre un nombre d'ouvertures de fixation compris entre 2 et 4, en particulier entre 2 et 3, pour chaque série se trouvant du côté de chacun des bords longitudinaux opposés.

Selon un autre aspect de l'invention il est proposé un kit de couverture pour abri de culture, de type serre, comprenant :
- un élément de couverture selon l'invention, et
- au moins un, en particulier plusieurs, élément(s) de fixation longiforme(s), prévu(s) pour fixer ledit élément de couverture sur une ossature dudit abri de culture.

Bien entendu les éléments de fixation longiforme peuvent être prévus pour être utilisé du côté de chaque bord longitudinal de l'élément de couverture.

Selon l'invention, chaque élément de fixation longiforme peut présenter une longueur sensiblement égale à la longueur de l'abri de culture à couvrir.

Alternativement, chaque élément de fixation longiforme peut présenter une longueur inférieure ou égale à la moitié de la longueur de l'abri de culture à couvrir. Il est alors nécessaire d'utiliser au moins deux éléments de fixation longiformes pour fixer l'élément de couverture à l'ossature de l'abri de culture. Dans ce cas, au moins un, en particulier chaque, élément de fixation longiforme peut comporter au niveau d'au moins une, en particulier de chacune, de ses extrémités un moyen d'assemblage, amovible ou démontable, dudit élément de fixation longiforme avec un autre élément de fixation longiforme, en particulier qui lui est identique.

Avantageusement, un tel moyen d'assemblage de deux éléments de fixation longiformes entre eux peut réaliser un assemblage par vissage, par clipsage, par serrage, etc.

Selon encore un autre aspect de l'invention, il est proposé un abri de culture, de type serre, comprenant :
- une ossature, en particulier rigide, et
- au moins un kit de couverture selon l'invention, ou au moins un élément de couverture souple selon l'invention.

Suivant un mode de réalisation préféré, mais nullement limitatif, l'ossature de l'abri de culture selon l'invention peut comprendre, du côté d'au moins une, en particulier de chacune, des faces latérales longitudinales dudit abri, plusieurs pattes de fixation, en particulier formant saillie de ladite ossature, alignées longitudinalement les unes avec les autres, sensiblement sur toute la longueur de ladite face latérale, et prévues pour maintenir le ou les élément(s) de fixation longiforme(s) préalablement passés dans une ouverture de fixation.

En particulier les pattes de fixation peuvent être prévues et positionnées de sorte que les éléments de fixation longiformes viennent se loger en dessous des pattes de fixation après application d'un effort sur lesdits éléments de fixation longiformes, ce qui a pour effet de tendre l'élément de couverture.

L'élément de couverture peut être muni de trous traversants laissant traverser les pattes de fixation lors du positionnement des éléments de fixation longiformes sous les pattes de fixation. Ces trous traversants peuvent être réalisés lors de la fabrication de l'élément de couverture ou lors de la pose de l'élément de couverture sur l'abri.

Alternativement, au moins une, en particulier chaque, patte de fixation peut présenter une extrémité libre pointue ou coupante de sorte qu'elle réalise le trou traversant, par perforation de l'élément de couverture, au moment où l'élément de fixation longiforme est poussé sous ladite patte de fixation par application d'un effort sur ledit élément de fixation longiforme, par un opérateur par exemple.

L'abri de culture selon l'invention peut être un abri de culture multi-chapelle, un tunnel, un bi-tunnel, un tunnel de jardin, un tunnel de potager, etc.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1a et 1b sont des représentations schématiques d'un premier exemple de réalisation d'un élément de couverture selon l'invention ;
- les FIGURES 2a et 2b sont des représentations schématiques d'un deuxième exemple de réalisation d'un élément de couverture selon l'invention ;
- les FIGURES 3a et 3b sont des représentations schématiques d'un troisième exemple de réalisation d'un élément de couverture selon l'invention ;
- la FIGURE 4 est une représentation schématique d'un premier exemple de réalisation d'une ouverture de fixation ;
- la FIGURE 5 est une représentation schématique d'un deuxième exemple de réalisation d'une ouverture de fixation ;
- la FIGURE 6 est une représentation schématique d'un troisième exemple de réalisation d'une ouverture de fixation ;
- la FIGURE 7 est une représentation d'un exemple d'abri de culture selon l'invention ; et
- la FIGURE 8 est une représentation schématique d'un quatrième exemple de réalisation d'un élément de couverture selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

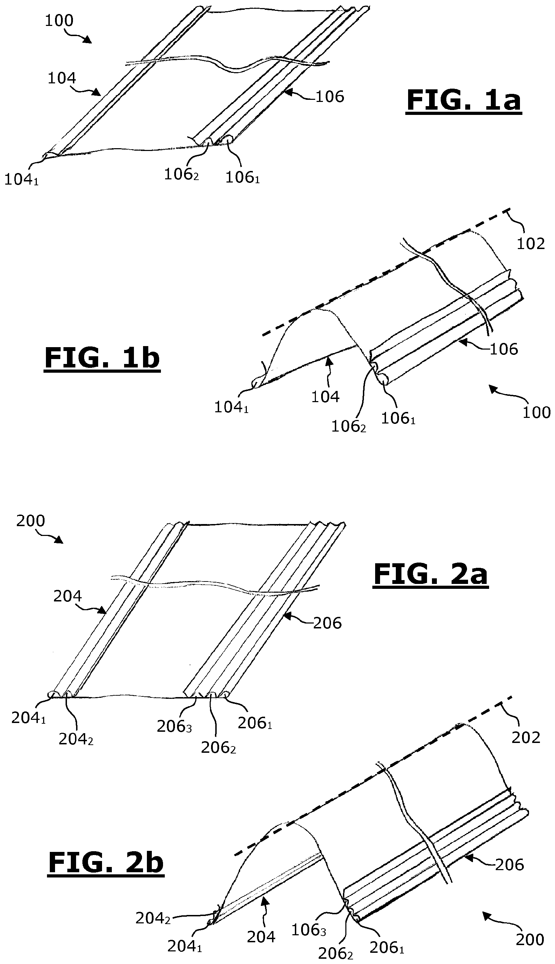

Les FIGURES 1a et 1b sont des représentations schématiques d'un premier exemple de réalisation, nullement limitatif, de l'élément de couverture souple selon l'invention.

L'élément de couverture souple et transparente 100 est représenté sur la FIGURE 1a à plat, et sur la FIGURE 1b dans sa configuration de fixation sur une ossature (non représentée sur la FIGURE 1b) d'un abri de culture, telle qu'une serre de culture. Lorsqu'il est disposé sur une ossature d'un abri de culture, l'élément de couverture souple et transparente 100 épouse la forme extérieure de l'ossature, qui, dans l'exemple représenté sur les FIGURES 1a et 1b est une forme circulaire ou arrondie, avec une ligne plus haute définissant la ligne de faitage 102 de l'abri de culture.

L'élément de couverture 100 représenté sur les FIGURES 1a et 1b présente une forme générale rectangulaire et comporte deux bords longitudinaux opposés 104 et 106. Il est prévu pour être fixé sur une ossature d'un abri de culture au niveau de chacun de ses bords 104 et 106.

L'élément de couverture 100 comporte au niveau d'un de ses bords, à savoir le bord 104, une unique ouverture de fixation, à savoir l'ouverture de fixation 104₁ prévue pour accueillir un élément de fixation longiforme (non représenté sur les FIGURES la et 1b), tel qu'un tube ou une barre, par exemple réalisé en métal.

L'élément de couverture 100 comporte sur le bord opposé, à savoir le bord 106, une série de deux ouvertures de fixation, à savoir les ouvertures de fixation 106₁ et 106₂. Ces ouvertures de fixation 106₁ et 106₂ sont décalées l'une par rapport à l'autre suivant une direction perpendiculaire au bord 106, de sorte que l'ouverture de fixation 106₁ se trouve plus proche du bord 106 comparée à l'ouverture de fixation 106₂. Chacune des ouvertures de fixation 106₁ et 106₂ est prévue pour accueillir un élément de fixation longiforme (non représenté sur les FIGURES 1a et 1b).

Lors de la fixation de l'élément de couverture 100 sur un abri de culture, il est possible de modifier ou d'ajuster la tension appliquée à audit élément de couverture 100, entre ses bords 104 et 106, en choisissant l'une ou l'autre des ouvertures de fixation 106₁ ou 106₂ du bord longitudinal 106. Plus précisément, pour une même ossature d'abri de culture, la tension appliquée à l'élément de couverture entre ses bords 104 et 106 sera plus grande si l'élément de couverture est fixé à l'aide de l'ouverture de fixation 106₂. Ainsi, pour une même ossature d'abri de culture, la tension appliquée à l'élément de couverture entre ses bords 104 et 106 sera plus faible si l'élément de couverture est fixé à l'aide de l'ouverture de fixation 106₁.

Les FIGURES 2a et 2b sont des représentations schématiques d'un deuxième exemple de réalisation, nullement limitatif, de l'élément de couverture souple selon l'invention.

L'élément de couverture souple et transparente 200 est représenté sur la FIGURE 2a à plat, et sur la FIGURE 2b dans sa configuration de fixation sur une ossature (non représenté sur la FIGURE 1b) d'un abri de culture, tel qu'une serre de culture. Lorsqu'il est disposé sur une ossature d'un abri de culture, l'élément de couverture souple et transparente 200 épouse la forme extérieure de l'ossature, qui, dans l'exemple représenté sur les FIGURES 2a et 2b est une forme circulaire ou arrondie, avec une ligne plus haute définissant la ligne de faitage 202 de l'abri de culture.

L'élément de couverture 200 représenté sur les FIGURES 2a et 2b présente une forme générale rectangulaire et comporte deux bords longitudinaux opposés 204 et 206. Il est prévu pour être fixé sur une ossature d'un abri de culture au niveau de chacun de ses bords 204 et 206.

L'élément de couverture 200 comporte au niveau d'un de ses bords, à savoir le bord 204, une série de deux ouvertures de fixation, à savoir les ouvertures de fixation 204₁ et 204₂. Ces ouvertures de fixation 204₁ et 204₂ sont décalées l'une par rapport à l'autre suivant une direction perpendiculaire au bord 204, de sorte que l'ouverture de fixation 204₁ se trouve plus proche du bord 204 comparée à l'ouverture de fixation 204₂. Chacune des ouvertures de fixation 204₁ et 204₂ du bord 204 est prévue pour accueillir un élément de fixation longiforme (non représenté sur les FIGURES 2a et 2b).

L'élément de couverture 200 comporte sur le bord longitudinal opposé, à savoir le bord 206, une série de trois ouvertures de fixation, à savoir les ouvertures de fixation 206₁, 206₂ et 206₃. Chacune des ouvertures de fixation 206₁, 206₂ et 206₃ sont décalées les unes par rapport aux autres suivant une direction perpendiculaire au bord 206, de sorte que l'ouverture de fixation 206₁ est la plus proche du bord 206, l'ouverture 206₃ est la plus éloignée du bord 206 et l'ouverture 206₂ se trouve entre les ouvertures de fixation 206₁ et 206₃. Chacune des ouvertures de fixation 206₁-206₃ est prévue pour accueillir un élément de fixation longiforme (non représenté sur les FIGURES 2a et 2b).

Avec l'élément de couverture 200, il est possible de modifier ou d'ajuster la tension appliquée à audit élément de couverture 100, entre ses bords 204 et 206, du côté de chacun des bords 204 et 206. Plus l'ouverture de fixation choisie sera proche du bord, moins la tension appliquée à l'élément de couverture entre ses deux bords sera faible, et *vice versa.*

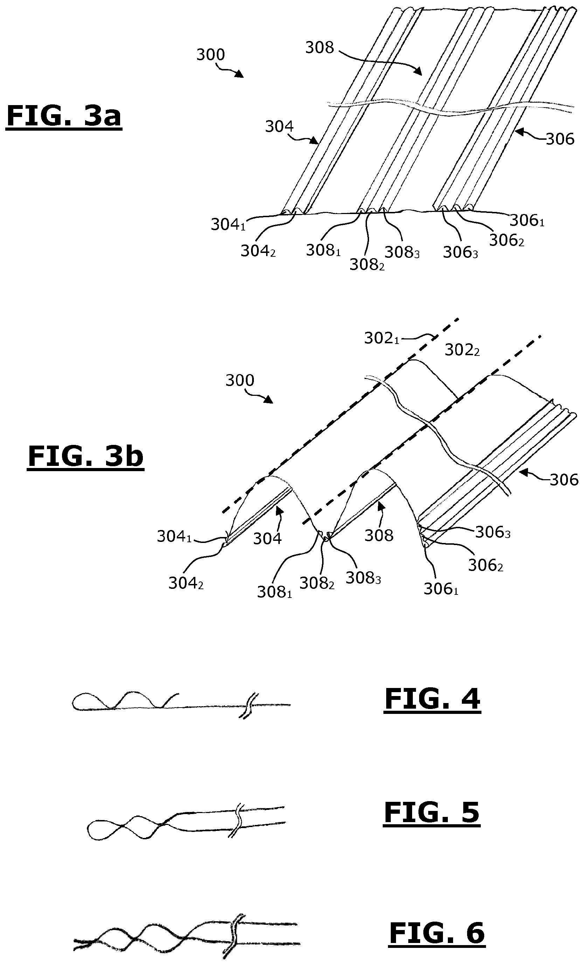

Les FIGURES 3a et 3b sont des représentations schématiques d'un troisième exemple de réalisation, nullement limitatif, de l'élément de couverture souple selon l'invention.

L'élément de couverture souple et transparente 300 est représenté sur la FIGURE 3a à plat, et sur la FIGURE 3b dans sa configuration de fixation sur une ossature (non représenté sur la FIGURE 1b) de deux abris de culture juxtaposés, identiques ou différents, présentant chacun une ligne de faitage, à savoir 302₁ et 302₂.

De manière similaire, ou identique, à l'élément de couverture 200 des FIGURES 2a et 2b, l'élément de couverture 300 comporte sur un bord longitudinal 304 une série de deux ouvertures de fixation 304₁ et 304₂ et sur le bord longitudinal opposé 306 une série de trois ouvertures de fixation 306₁-306₃. Les ouvertures de fixation 304₁ et 304₂ permettent de réaliser un ajustement de la tension appliquée à l'élément de couverture 300 du côté du bord 304 et les ouvertures de fixation 306₁-306₃ permettent de réaliser un ajustement de la tension appliquée à l'élément de couverture 300 du côté du bord 306.

De plus, l'élément de couverture 300 comporte au niveau d'une zone intermédiaire 308, se trouvant entre les bords longitudinaux 304 et 306, une série de trois ouvertures de fixations, 308₁-308₃ décalées les unes par rapport aux autres dans une direction perpendiculaire aux bords 304 et 306, de sorte que l'ouverture de fixation 308₁ se trouve plus proche du bord 304, l'ouverture de fixation 308₃ se trouve proche du bord 306 et l'ouverture de fixation 308₂ se trouve entre les ouvertures de fixation 308₁ et 308₃.

Tel que montré sur la FIGURE 3b, l'élément de couverture est utilisé pour couvrir l'ossature de deux abris de culture juxtaposés, identique ou similaire. Les ouvertures de fixation 308₁-308₃ de la zone 308 se trouvent entre les abris juxtaposés. Ces ouvertures de fixation 308₁-308₃ permettent de fixer une partie de l'élément de couverture 300 sur l'un des abris juxtaposés et la partie restante de l'élément de couverture 300 sur l'autre des abris juxtaposés. De plus, les ouvertures de fixation 308₁-308₃ permettent de réaliser, un ajustement de la tension appliquée à chacune des parties de l'élément de couverture 300 indépendamment de l'autre partie. Ainsi, chaque abri de culture peut bénéficier d'un élément de couverture dont la tension est différente.

Bien entendu, l'élément de couverture 300 peut comporter plusieurs zones intermédiaires comprenant chacune une ou plusieurs ouvertures de fixation.

Sur tous les exemples décrits, l'élément de couverture se présente sous la forme d'une bâche plastique, par exemple transparente, réalisée par exemple en polyéthylène, par exemple d'épaisseur comprise entre 80µm et 300µm, de largeur comprise entre 6,5m et 10m, de longueur comprise entre 15 et 120m.

La largeur de chacune des ouvertures de fixation peut être différente. Alternativement, la largeur de chacune des ouvertures de fixation est identique, par exemple comprise entre 2cm et 6cm, en particulier de 4cm.

L'écartement entre deux ouvertures juxtaposées d'une même série, considérées deux à deux, peut être différent. Alternativement, l'écartement entre deux ouvertures juxtaposées d'une même série, considérées deux à deux, peut être constante ou identique, par exemple compris entre 2cm et 6cm, en particulier de 4cm.

Bien entendu, le nombre des ouvertures de fixation au niveau de chacun des bords longitudinaux et au niveau de la zone intermédiaire peut être différent de ceux décrits en référence aux FIGURES.

En outre, chaque ouverture de fixation représentée sur les FIGURES se présente sous une forme continue, s'étendant sensiblement sur toute la longueur du bord longitudinal de l'élément de couverture. Alternativement, au moins une, en particulier chaque, ouverture de fixation peut être discontinue. Par exemple, une ouverture de fixation discontinue peut être formée par un ou plusieurs anneaux alignés et distants entre eux.

La FIGURE 4 est une représentation schématique d'un premier exemple de réalisation d'une ouverture de fixation.

Les ouvertures de fixation représentées sur la FIGURE 4 sont obtenues par repliement, vers l'intérieur ou vers l'extérieur, de l'élément de couverture sur lui-même au niveau du bord longitudinal de l'élément de couverture. La partie repliée est ensuite collée sur le reste de l'élément de couverture, suivant une ligne de collage longitudinale, continue ou discontinue. Le collage se fait de préférence par chauffage de l'élément de couverture et compression de la partie repliée sur le reste de l'élément de couverture.

La partie repliée peut présenter une largeur choisie par l'utilisateur, par exemple de l'ordre de 1mètre. Plus généralement la partie repliée peut comporter une extrémité libre dont la position sur la structure peut être modifiée par l'utilisateur.

La FIGURE 5 est une représentation schématique d'un deuxième exemple de réalisation d'une ouverture de fixation.

Dans l'exemple décrit sur la FIGURE 5, l'élément de couverture est réalisée par deux couches reliées entre-elles de manière continue. Les ouvertures de fixation sont obtenues par collage, suivant une ligne de collage longitudinale, continue ou discontinue, des deux couches entre elles. Le collage se fait de préférence par chauffage et compression des deux couches entre-elles.

La FIGURE 6 est une représentation schématique d'un troisième exemple de réalisation d'une ouverture de fixation.

Dans l'exemple décrit sur la FIGURE 6, l'élément de couverture est réalisé par deux couches indépendantes l'une de l'autre. Les ouvertures de fixation sont obtenues par collage, suivant une ligne de collage longitudinale, continue ou discontinue, des deux couches entre elles. Le collage se fait de préférence par chauffage et compression des deux couches entre-elles.

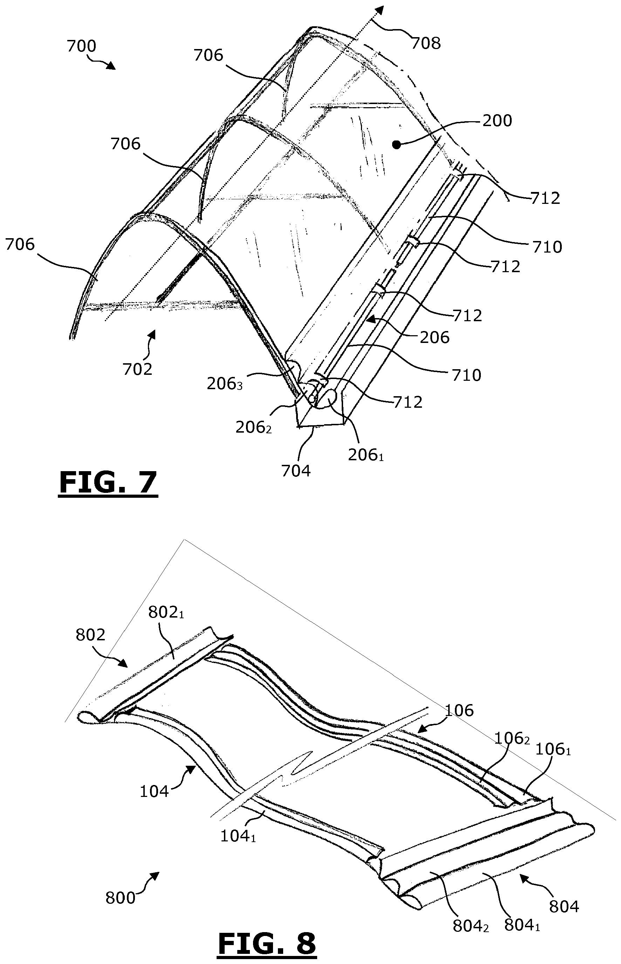

La FIGURE 7 est une représentation schématique partielle d'un exemple de réalisation d'un abri de culture selon l'invention.

L'abri de culture 700 représenté sur la FIGURE 7 est un abri de culture multi-chapelle et comporte une ossature 702. L'ossature 702 comprend sur chaque côté longitudinal de l'abri 700, un chéneau 704. Sur la FIGURE 7 seul un chéneau 704 est représenté.

L'ossature 702 comporte également une pluralité de fermes 706 disposées parallèles entre elles et alignées suivant la direction longitudinale de l'abri, matérialisée par la flèche 708.

L'abri de culture 700 selon l'invention comporte un élément de couverture souple et transparente qui peut être l'un quelconque des éléments de couverture 100, 200 ou 300 préalablement décrits. Dans l'exemple représenté, l'abri de culture 700 est représenté avec l'élément de couverture 200 de la FIGURE 2.

L'élément de couverture 200 est fixé à l'ossature 702 grâce à des éléments de fixation longiforme 710, identiques entre eux et pouvant être assemblés entre eux au niveau de leurs extrémités adjacentes, par vissage d'un élément de fixation longiforme 700 dans l'élément de fixation longiforme adjacent. Sur la FIGURE 7, les éléments de fixation longiformes 710 sont représentés non assemblés pour plus de détails de représentation.

Le chéneau comporte des crochets ou pattes de fixation 712 solidaires dudit chéneau 712. Chaque patte de fixation 712 est légèrement recourbée vers le bas de sorte à maintenir l'élément de fixation longiforme 710 une fois que ce dernier a été positionné sous ladite patte de fixation 712. De plus, chaque patte de fixation 712 présente une extrémité tranchante en vue de réaliser un trou traversant l'élément de couverture 200.

La fixation de l'élément de couverture sur l'ossature 702 est réalisée de la manière suivante. Les éléments de fixation longiformes 710 sont passés dans l'ouverture de fixation 206₂ du bord 206 de l'élément de couverture 200. Une fois passés dans l'ouverture de fixation 206₃ les éléments de fixation longiforme sont vissés entre eux. Puis, une pression est appliquée, par exemple par un opérateur à l'aide de son pied, sur chaque élément de fixation 710 pour faire passer ledit élément de fixation longiforme 210 sous les pattes de fixation 712. Ce faisant, la patte de fixation 712 est forcée à transpercer l'élément de couverture 200 et à le traverser. Une fois positionné sous la patte de fixation 712, l'élément de fixation longiforme 710 est maintenu fermement sous la dite patte de fixation 712 sous l'effet de la tension de l'élément de couverture 200. Cette opération est réalisée pour chaque patte de fixation 712 et chaque élément de fixation longiforme 710 le long de chacun des côtés de l'abri de culture 700.

La FIGURE 8 est une représentation schématique d'un quatrième exemple de réalisation, nullement limitatif, de l'élément de couverture souple selon l'invention.

L'élément de couverture souple et transparente 800 est représenté sur la FIGURE 8 comporte toutes les caractéristiques de l'élément de couverture 100 de la FIGURE 1.

En plus, l'élément de couverture 800 comprend au niveau d'un de ses bords transversaux, à savoir le bord transversal 802, perpendiculaire à ses bords longitudinaux 104 et 106, une ouverture de fixation transversale 802₁ perpendiculaire aux bords longitudinaux 104 et 106 et aux ouvertures de fixation longitudinales 104₁, 106₁ et 106₂, et prévue pour accueillir un élément de fixation longiforme (non représenté), tel qu'un tube ou une barre, par exemple réalisé en métal.

L'élément de couverture 800 comporte sur le bord transversal opposé, à savoir le bord 804, une série de deux ouvertures de fixation transversales, à savoir les ouvertures de fixation transversales 804₁ et 804₂, perpendiculaires aux bords longitudinaux 104 et 106 et aux ouvertures de fixation longitudinales 104₁, 106₁ et 106₂. Ces ouvertures de fixation transversales 804₁ et 804₂ sont décalées l'une par rapport à l'autre suivant une direction perpendiculaire au bord transversal 804, de sorte que l'ouverture de fixation transversal 804₁ se trouve plus proche du bord transversal 804 comparée à l'ouverture de fixation 804₂. Chacune des ouvertures de fixation transversales 804₁ et 804₂ est prévue pour accueillir un élément de fixation longiforme (non représenté).

Lors de la fixation de l'élément de couverture 800 sur un abri de culture, il est possible de modifier ou d'ajuster la tension appliquée à audit élément de couverture 800, entre ses bords transversaux 802 et 804, en choisissant l'une ou l'autre des ouvertures de fixation transversales 804₁ ou 804₂. Plus précisément, pour une même ossature d'abri de culture, la tension appliquée à l'élément de couverture entre ses bords transversaux 802 et 804 sera plus grande si l'élément de couverture est fixé à l'aide de l'ouverture de fixation 804₂.

Alternativement les nombres d'ouvertures de fixation transversales peuvent être différents.

Plus généralement, l'élément de couverture peut comprendre :
- une série d'au moins deux ouvertures de fixation longitudinales du côté d'un de ses bords longitudinaux,
- et éventuellement au moins une ouverture de fixation longitudinale du côté de l'autre de ses bords longitudinaux,
- et éventuellement au moins une ouverture de fixation transversale du côté d'au moins un, en particulier de chacun, de ses bords transversaux,
- et éventuellement une ou plusieurs ouvertures de fixation longitudinales, respectivement transversales, entre ses bords longitudinaux, respectivement transversaux.

Bien entendu, l'invention n'est pas limitée aux exemples détaillés ci-dessus.

## Revendications

1. Elément de couverture (100,200,300) souple, pour abri de culture (700), de type serre, prévu pour être fixé sur une ossature (702) dudit abri de culture (700) du côté d'au moins un de ses bords longitudinaux (104,106;204,206;304,306), **caractérisé en ce qu'**il comprend du côté d'au moins un desdits bords longitudinaux (106;204,206;304,306), une série d'au moins deux ouvertures (106₁,106₂;204₁,204₂ ;206₁-206₃;304₁,304₂;306₁-306₃), dites de fixation, décalées dans une direction perpendiculaire audit bord longitudinal (106;204,206;304,306), et prévues chacune pour recevoir sélectivement un élément de fixation longiforme (710) de sorte à ajuster la tension dudit élément de couverture en fonction de l'ouverture de fixation utilisée.

2. Elément de couverture (100) selon la revendication 1, **caractérisé en ce qu'**il est prévu pour être fixé sur l'ossature (702) de l'abri de culture (700) du côté de deux bords longitudinaux opposés (104,106), ledit élément de couverture (100) comprenant :
- du côté de l'un desdits bords longitudinaux opposés (106), une série d'au moins deux ouvertures de fixation (106₁,106₂), décalées dans une direction perpendiculaire audit bord longitudinal (106) de sorte à ajuster la tension dudit élément de couverture en fonction de l'ouverture de fixation utilisée ; et
- du côté de l'autre desdits bords longitudinaux opposés (104), une unique ouverture de fixation (104₁) ;
prévues chacune (104₁,106₁,106₂) pour recevoir un élément de fixation longiforme (710).

3. Elément de couverture (200,300) selon la revendication 1, **caractérisé en ce qu'**il est prévu pour être fixé sur l'ossature (702) de l'abri de culture (700) du côté de deux bords longitudinaux opposés (204,206;304,306), ledit élément de couverture (200,300) comprenant du côté chacun desdits bords longitudinaux opposés (204,206;304,306), une série d'au moins deux ouvertures de fixation (204₁,204₂ ;206₁-206₃;304₁,304₂ ;306₁-306₃), décalées dans une direction perpendiculaire audit bord longitudinal (204,206;304,306), et prévues chacune pour recevoir un élément de fixation longiforme (710) de sorte à ajuster la tension dudit élément de couverture en fonction de l'ouverture de fixation utilisé.

4. Elément de couverture (300) selon l'une quelconque des revendications précédentes, **caractérisé en ce qu'**il comprend en outre, au niveau d'au moins une zone (308), dite intermédiaire, entre ses deux bords longitudinaux (304,306), une ouverture de fixation ou une série d'au moins deux ouvertures de fixation (308₁-308₃).

5. Elément de couverture selon l'une quelconque des revendications précédentes, **caractérisé en ce qu'**au moins une ouverture de fixation est formée par repliement dudit élément de couverture sur lui-même au niveau d'un bord dudit élément de couverture, et collage de la partie repliée sur le reste dudit élément de couverture suivant une ligne de collage, continue ou discontinue.

6. Elément de couverture selon l'une quelconque des revendications précédentes, **caractérisé en ce qu'**il est réalisé, au moins en partie, par assemblage d'au moins deux feuilles de couverture souples, au moins une ouverture de fixation étant formée par collage entre-elles de deux desdites feuilles suivant une ligne de collage longitudinale, continue ou discontinue.

7. Elément de couverture selon l'une quelconque des revendications précédentes, **caractérisé en ce qu'**au moins une ouverture de fixation est formée par collage audit élément de couverture d'au moins un anneau, ou d'une série d'anneaux alignés, réalisé(s) indépendamment dudit élément de couverture.

8. Elément de couverture selon l'une quelconque des revendications précédentes, **caractérisé en ce que**, pour au moins une série d'au moins deux ouvertures de fixation :
- au moins deux ouvertures de fixation de ladite série présentent une taille identique ou différente ; et/ou
- les ouvertures de fixation de ladite série sont décalées les unes des autres suivant un pas d'écartement constant ou variable.

9. Elément de couverture selon l'une quelconque des revendications 3 à 8, **caractérisé en ce que** :
- au moins une ouverture de fixation d'une série se trouvant du côté d'un bord présente une taille identique à, ou différente de, la taille d'au moins une ouverture de fixation d'une série se trouvant du côté de l'autre bord ; et/ou
- au moins deux ouvertures de fixation d'une série se trouvant du côté d'un bord présentent entre-elles un pas d'écartement identique au, ou différent du, pas d'écartement entre au moins deux ouvertures de fixation d'une série se trouvant du côté de l'autre bord.

10. Elément de couverture selon l'une quelconque des revendications précédentes, **caractérisé en ce que** :
- au moins une ouverture de fixation présente une largeur comprise entre 2-6 cm ; et/ou
- au moins deux ouvertures de fixation d'une série présentent entre-elles un pas d'écartement compris entre 2-6 cm.

11. Elément de couverture (200,300) selon l'une quelconque des revendications 3 à 10, **caractérisé en ce qu'**il comprend un nombre d'ouvertures de fixation compris entre 2 et 4 pour chaque série se trouvant du côté de chacun des bords (204,206;304,306) longitudinaux opposés.

12. Kit de couverture pour abri de culture (700), de type serre, comprenant :
- un élément de couverture (100,200,300) selon l'une quelconque des revendications précédentes, et
- au moins un, en particulier plusieurs, élément(s) de fixation longiforme(s) (710), prévu(s) pour fixer ledit élément de couverture (100,200,300) sur une ossature (702) dudit abri de culture (700).

13. Abri de culture (700), de type serre, comprenant :
- une ossature (702), en particulier rigide, et
- au moins un kit de couverture selon la revendication précédente, ou au moins un élément de couverture souple (100,200,300) selon l'une quelconque des revendications 1 à 11.

14. Abri de culture (700) selon la revendication précédente, **caractérisé en ce que** l'ossature (702) comprend du côté d'au moins une, en particulier de chacune, des faces latérales longitudinales dudit abri (700), plusieurs pattes de fixation (712), alignées longitudinalement les unes avec les autres, sensiblement sur toute la longueur de ladite face latérale, et prévues pour maintenir le ou les élément(s) de fixation longiforme(s) (710) préalablement passés dans une ouverture de fixation (206₂).

## Patentansprüche

1. Flexibles Abdeckelement (100, 200, 300) für ein Treibhaus-artiges Gewächshaus (700), das zur Befestigung an einer Unterkonstruktion (702) des Gewächshauses (700) an mindestens einer seiner Längskanten (104, 106; 204, 206; 304, 306) vorgesehen ist, **dadurch gekennzeichnet, dass** es an mindestens einer der Längskanten (106; 204, 206; 304, 306) eine Reihe von mindestens zwei sogenannten Befestigungsöffnungen (106₁, 106₂; 204₁, 204₂, 206₁-206₃; 304₁, 304₂; 306₁-306₃) umfasst, welche in einer Richtung senkrecht zur Längskante (106; 204, 206, 304, 306) versetzt angeordnet und jeweils dafür vorgesehen sind, wahlweise ein langförmiges Befestigungselement (710) derart aufzunehmen, sodass die Spannung des Abdeckelements in Abhängigkeit von der verwendeten Befestigungsöffnung eingestellt wird.

2. Abdeckelement (100) nach Anspruch 1, **dadurch gekennzeichnet, dass** es zur Befestigung an der Unterkonstruktion (702) des Gewächshauses (700) an zwei gegenüberliegenden Längskanten (104, 106) vorgesehen ist, wobei das Abdeckelement (100) umfasst:
- an einer der gegenüberliegenden Längskanten (106), eine Reihe von mindestens zwei Befestigungsöffnungen (106₁, 106₂), die in einer Richtung senkrecht zur Längskante (106) derart versetzt angeordnet sind, sodass die Spannung des Abdeckelements in Abhängigkeit von der verwendeten Befestigungsöffnung eingestellt wird; und
- an der anderen der gegenüberliegenden Längskanten (104), eine einzelne Befestigungsöffnung (104₁);
jeweils (104₁, 106₁, 106₂) dafür vorgesehen, ein langförmiges Befestigungselement aufzunehmen (710).

3. Abdeckelement (200, 300) nach Anspruch 1, **dadurch gekennzeichnet, dass** es zur Befestigung an der Unterkonstruktion (702) des Gewächshauses (700) an zwei gegenüberliegenden Längskanten (204, 206; 304, 306) vorgesehen ist, wobei das Abdeckelement (200, 300) an jeder der gegenüberliegenden Längskanten (204, 206; 304, 306) eine Reihe von mindestens zwei Befestigungsöffnungen (204₁, 204₂; 206₁-206₃; 304₁, 304₂; 306₁-306₃) umfasst, die in einer Richtung senkrecht zur Längskante (204, 206; 304, 306) versetzt angeordnet und jeweils dafür vorgesehen sind, ein langförmiges Befestigungselement (710) derart aufzunehmen, sodass die Spannung des Abdeckelements in Abhängigkeit von der verwendeten Befestigungsöffnung eingestellt wird.

4. Abdeckelement (300) nach einem der vorhergehenden Ansprüche, **dadurch gekennzeichnet, dass** es außerdem an mindestens einem sogenannten Zwischenbereich (308) zwischen seinen zwei Längskanten (304, 306) eine Befestigungsöffnung oder eine Reihe von mindestens zwei Befestigungsöffnungen (308₁-308₃) umfasst.

5. Abdeckelement nach einem der vorhergehenden Ansprüche, **dadurch gekennzeichnet, dass** mindestens eine Befestigungsöffnung durch Zurückfaltung des Abdeckelements auf sich selbst an einer Kante des Abdeckelements und durch Kleben des zurückgefalteten Teilbereichs auf dem restlichen Abdeckelement entlang einer durchgezogenen oder unterbrochenen Klebelinie gebildet ist.

6. Abdeckelement nach einem der vorhergehenden Ansprüche, **dadurch gekennzeichnet, dass** es zumindest teilweise durch Zusammenfügen von mindestens zwei flexiblen Abdeckfolien ausgebildet ist, wobei mindestens eine Befestigungsöffnung durch Kleben von zwei der Folien miteinander entlang einer länglichen, durchgezogenen oder unterbrochenen Klebelinie gebildet ist.

7. Abdeckelement nach einem der vorhergehenden Ansprüche, **dadurch gekennzeichnet, dass** mindestens eine Befestigungsöffnung durch Kleben auf dem Abdeckelement von mindestens einem Ring bzw. einer Reihe von miteinander fluchtenden Ringen gebildet ist, welche unabhängig von dem Abdeckelement ausgebildet ist/sind.

8. Abdeckelement nach einem der vorhergehenden Ansprüche, **dadurch gekennzeichnet, dass** für wenigstens eine Reihe von mindestens zwei Befestigungsöffnungen:
- mindestens zwei Befestigungsöffnungen der Reihe eine gleiche oder unterschiedliche Größe aufweisen; und/oder
- die Befestigungsöffnungen der Reihe in einem konstanten oder variablen Abstand versetzt voneinander angeordnet sind.

9. Abdeckelement nach einem der Ansprüche 3 bis 8, **dadurch gekennzeichnet, dass**:
- mindestens eine Befestigungsöffnung einer Reihe, welche auf der Seite einer Kante gelagert ist, eine Größe aufweist, die gleich der Größe von mindestens einer Befestigungsöffnung einer Reihe auf der Seite der anderen Kante ist oder von dieser abweicht; und/oder
- mindestens zwei Befestigungsöffnungen einer Reihe, welche auf der Seite einer Kante gelagert ist, unter einander einen Abstand aufweisen, der gleich dem Abstand zwischen mindestens zwei Befestigungsöffnungen einer Reihe auf der Seite der anderen Kante ist oder von diesem Abstand abweicht.

10. Abdeckelement nach einem der vorhergehenden Ansprüche, **dadurch gekennzeichnet, dass**:
- mindestens eine Befestigungsöffnung eine Breite von 2 bis 6 cm aufweist; und/oder
- mindestens zwei Befestigungsöffnungen einer Reihe unter einander einen Abstand von 2 bis 6 cm aufweisen.

11. Abdeckelement (200, 300) nach einem der Ansprüche 3 bis 10, **dadurch gekennzeichnet, dass** es eine Anzahl von 2 bis 4 Befestigungsöffnungen für jede Reihe auf der Seite der jeweiligen gegenüberliegenden Längskanten (204, 206; 304, 306) umfasst.

12. Abdecksatz für ein Treibhaus-artiges Gewächshaus (700), umfassend:
- ein Abdeckelement (100, 200, 300) nach einem der vorhergehenden Ansprüche, und
- mindestens ein, insbesondere mehrere langförmige Befestigungselement(e) (710), welche zur Befestigung des Abdeckelements (100, 200, 300) an einer Unterkonstruktion (702) des Gewächshauses (700) vorgesehen ist/sind.

13. Treibhaus-artiges Gewächshaus (700), umfassend:
- eine insbesondere starre Unterkonstruktion (702), und
- mindestens einen Abdecksatz nach dem vorhergehenden Anspruch oder mindestens ein flexibles Abdeckelement (100, 200, 300) nach einem der Ansprüche 1 bis 11.

14. Gewächshaus (700) nach dem vorhergehenden Anspruch, **dadurch gekennzeichnet, dass** die Unterkonstruktion (702) auf der Seite mindestens einer, insbesondere jeder der länglichen Seitenflächen des Gewächshauses (700) mehrere Befestigungslaschen (712) umfasst, welche längs aneinander in der Flucht, im Wesentlichen auf der gesamten Länge der Seitenfläche angeordnet sind und dafür vorgesehen sind, das oder die langförmige(n) Befestigungselement(e) (710) zu halten, welche vorab durch eine Befestigungsöffnung (206₂) geführt wurden.

## Claims

1. Flexible cover element (100, 200, 300) for a greenhouse-type crop shelter (700), wherein said element is designed to be fixed on a framework (702) of said crop shelter (700) on the side of at least one of its longitudinal edges (104, 106; 204, 206; 304, 306), **characterised in that** said element comprises on the side of the at least one of said longitudinal edges (106; 204, 206; 304, 306), a series of at least two openings (106₁, 106₂; 204₁, 204₂; 206₁-206₃; 304₁, 304₂; 306₁-306₃), termed attachment openings, offset in a perpendicular direction to said longitudinal edge (106; 204, 206; 304, 306), and wherein each attachment opening is designed to selectively receive an elongate attachment element (710), so as to adjust the tension of said cover element according to the attachment opening used.

2. Cover element (100) according to claim 1, **characterised in that** it is designed to be attached to the framework (702) of the crop shelter (700) by the two longitudinally opposite edges (104, 106), wherein said cover element (100) comprises:
- on the side of one of the said longitudinally opposite edges (106), a series of at least two attachment openings (106₁, 106₂), offset in a perpendicular direction to said longitudinal edge (106) so as to adjust the tension of said cover element according to the attachment opening used; and
- on the side of the other of the said longitudinally opposite edges (104), a sole attachment opening (104₁);
each (104₁, 106₁, 106₂) designed to receive an elongate attachment element (710).

3. Cover element (200, 300) according to claim 1, **characterised in that** it is designed to be fixed on the framework (702) of the crop shelter (700) on the side of two longitudinally opposite edges (204, 206; 304, 306), wherein said cover element (200, 300) comprises on the side of each of said longitudinally opposite edges (204, 206; 304, 306), a series of at least two attachment openings (204₁, 204₂; 206₁-206₃; 304₁, 304₂; 306₁-306₃), offset in a perpendicular direction to said longitudinal edge (204, 206; 304, 306), and wherein each attachment opening is designed to receive an elongate attachment element (710), so as to adjust the tension of said cover element according to the attachment opening used.

4. Cover element (300) according to one of the preceding claims, **characterised in that** it additionally comprises an attachment opening or a series of at least two attachment openings (308₁-308₃) located in at least one zone (308), termed intermediate zone, between its two longitudinal edges (304, 306).

5. Cover element according to one of the preceding claims, **characterised in that** at least one attachment opening is formed by folding said cover element back on itself at an edge of said cover element, and bonding the folded-back part onto the remainder of said cover element along a continuous or discontinuous bond line.

6. Cover element according to one of the preceding claims, **characterised in that** it is produced, at least partly, by assembling at least two flexible cover sheets, wherein at least one attachment opening is formed by bonding the two said sheets together along a continuous or discontinuous, longitudinal bond line.

7. Cover element according to one of the preceding claims, **characterised in that** at least one attachment opening is formed by bonding to said cover element at least one ring, or a series of aligned rings, produced independently of said cover element.

8. Cover element according to one of the preceding claims, **characterised in that** for at least one series of at least two attachment openings:
- at least two attachment openings of said series are of the same or different size; and/or
- the attachment openings of said series are spaced apart from one another with a constant or variable spacing.

9. Cover element according to one of claims 3 to 8, **characterised in that**:
- at least one attachment opening of a series located on the side of one edge is identical to or different in size from the size of at least one attachment opening of a series located on the side of the other edge; and/or
- at least two attachment openings of a series located on the side of one edge are spaced apart from one another with an identical or different spacing to the spacing between the at least two attachment openings of a series located on the side of the other edge.

10. Cover element according to one of the preceding claims, **characterised in that**:
- the width of at least one attachment opening is between 2-6 cm; and/or
- the spacing between at least two attachment openings of a series is between 2-6 cm.

11. Cover element (200, 300) according to one of claims 3 to 10, **characterised in that** it comprises between 2 and 4 attachment openings for each series located on the side of each of the opposite longitudinal edges (204,206; 304,306).

12. Covering kit for a greenhouse-type crop shelter (700), comprising:
- a cover element (100, 200, 300) according to one of the preceding claims, and
- at least one, in particular a plurality of elongate attachment element(s) (710), designed for attaching said cover element (100, 200, 300) on a framework (702) of said crop shelter (700).

13. Greenhouse-type crop shelter (700), comprising:
- a framework (702), in particular a rigid framework, and
- at least one covering kit according to the preceding claim, or at least one flexible cover element (100, 200, 300) according to one of claims 1 to 11.

14. Crop shelter (700) according to the preceding claim, **characterised in that** the framework (702) comprises on the side of at least one, in particular of each of the longitudinal lateral side faces of said shelter (700), a plurality of attachment fittings (712), aligned longitudinally to one another, substantially along the total length of said lateral side face, and designed to maintain the elongate attachment element(s) (710), passed beforehand into an attachment opening (206₂).
